# EUROPEAN PATENT SPECIFICATION

(11) **EP 1 183 141 B1**
(45) Date of publication and mention of the grant of the patent: **12.03.2003**
(21) Application number: 00937069.3
(22) Date of filing: 07.06.2000
(51) Int. Cl.: B29C 45/17

(54) **GAS NOZZLE AND APPARATUS FOR GAS-ASSISTED INJECTION MOULDING**
GASDÜSE UND VORRICHTUNG FÜR GASUNTERSTÜTZTES SPRITZGIESSEN
BUSE ET APPAREIL DESTINES AU MOULAGE PAR INJECTION ASSISTE PAR GAZ

(30) Priority: 07.06.1999 GB 9913186
(43) Date of publication of application: 06.03.2002
(73) Proprietor: Cinpres Gas Injection Limited, Tamworth, Staffordshire B77 5ES (GB)
(72) Inventor: HALL, David John, Tamworth Staffordshire B79 8QR (GB)
(74) Representative: Bayliss, Geoffrey Cyril
(86) International application number: GB0002208
(87) International publication number: WO00074918

(56) References cited:
- WO-A-93/23228
- FR-A- 2 716 135
- GB-A- 2 298 610
- PATENT ABSTRACTS OF JAPAN vol. 1997, no. 07, 31 July 1997 (1997-07-31) -& JP 09 076275 A (ASAHI ENG CO LTD), 25 March 1997 (1997-03-25)

## Description

This invention relates to a gas nozzle for gas-assisted injection moulding. The invention also relates to an apparatus for gas-assisted injection moulding.

In gas-assisted injection moulding of a plastic article, it is known from EP-A-0644821 to provide a gas nozzle separate from the plastics injection nozzle. The gas nozzle is mounted in an opening within one of the mould parts for injecting pressurized gas directly into the plastics material within the mould cavity, whereby the gas creates a gas containing cavity in the plastics material, and for thereafter relieving the gas pressure within the gas containing cavity before the mould is opened. The gas supply/pressure relieving means comprises a retractable valve member connected to the piston of a hydraulic or pneumatic cylinder. In its forward position, the valve member projects into the mould cavity and pressurized gas is injected through a bore in the valve member. In its withdrawn position, gas is vented through the open valve port provided by the opening in which the gas nozzle is mounted, the gas passing to atmosphere between the valve member and the wall of the mould part. The bore of the valve member has a shut-off control valve comprising an axially movable member which is opened by the pressure of the gas to be injected and is closed by a spring. In its open position, the inner valve member projects further into the mould cavity than the outer valve member.

According to the invention there is provided a nozzle for supplying/relieving pressurized gas in gas assisted injection moulding of plastics material, the nozzle comprising:
a body member adapted to be mounted in a mould having a mould cavity, a portion of the body member or an extension thereof extending into an opening in the mould which at least communicates with the mould cavity;
a sleeve member mounted for sliding movement in a bore in the extending portion of the body member between an extended position in which one end of the sleeve projects beyond the extending portion of the body member into the mould cavity, and a retracted position;
said one end of the sleeve defining a valve port for an inner valve member axially movable within the sleeve for opening and closing the valve port,
attachment means for supplying pressurized gas to the inside of the sleeve whereby the inner valve member is movable into a valve port open position by the pressurized gas;
means for moving the inner valve member into a valve port closed position;
means for moving the sleeve between its extended and its retracted positions, and
a gap between the adjacent wall of the sleeve and the extending portion of the body member, which gap is closed to the mould cavity when the sleeve member is extended and open to the mould cavity when the sleeve member is retracted, whereby in the retracted position of the sleeve, the pressurized gas within the mould cavity can vent to atmosphere.

Preferably the means for moving the sleeve between its extended and retracted positions is a reversible electric motor, the sleeve being connected to the motor by means which enable the sleeve to move linearly. When the sleeve reaches its extended position, the motor preferably enters a stall mode.

With the sleeve in its extended position, pressure on the sleeve is preferably isolated from the motor and its gear box.

Preferably the connection means between the sleeve and the motor is a nut and spindle in driving relation, the nut being driven by the motor and the spindle being connected to the sleeve.

The body member preferably has an external thread for mounting the nozzle in a mould part or a bracket fixed thereto. In another embodiment, the nozzle is bolted to a mould part.

Preferably the wall of the sleeve is tapered inwardly from the outer end of the sleeve to define a lead-in to the valve seat of the valve port.

It is also preferred that the means for moving the inner valve member into a valve port closed position is a spring.

Preferably the inner valve member is a sliding fit within the sleeve, and has at least one flat extending longitudinally of the valve member to create a passage for pressurized gas through the sleeve when the inner valve member is extended by the pressure of the gas.

The outer end of the sleeve is preferably of reduced external dimension relative to the internal dimension of the extending portion of the body member, the body member having at least one groove extending longitudinally from a position at one end where it can communicate with the reduced end portion of the sleeve when the sleeve is in its retracted position, but is precluded from said communication when the sleeve is in its extended position, to an open position at its other end where it communicates directly or indirectly with the atmosphere.

The invention also provides an apparatus for gas-assisted injection moulding including a nozzle as defined above.

By way of example, specific embodiments will be described with reference to the accompanying drawings in which:-
Figure 1 shows an injection moulding machine having a nozzle for supplying/relieving pressurized gas into the plastics material within the mould cavity;
Figure 2 is a perspective view of the nozzle for supplying/relieving the pressurized gas to the mould cavity;
Figure 3 is a longitudinal section of the nozzle of Figure 1, with the electric motor omitted;
Figure 4 is a section along line 4-4 in Figure 3;
Figures 5 to 8 illustrate different stages in the injection moulding process; and
Figure 9 shows an alternative arrangement for mounting the nozzle in the mould.

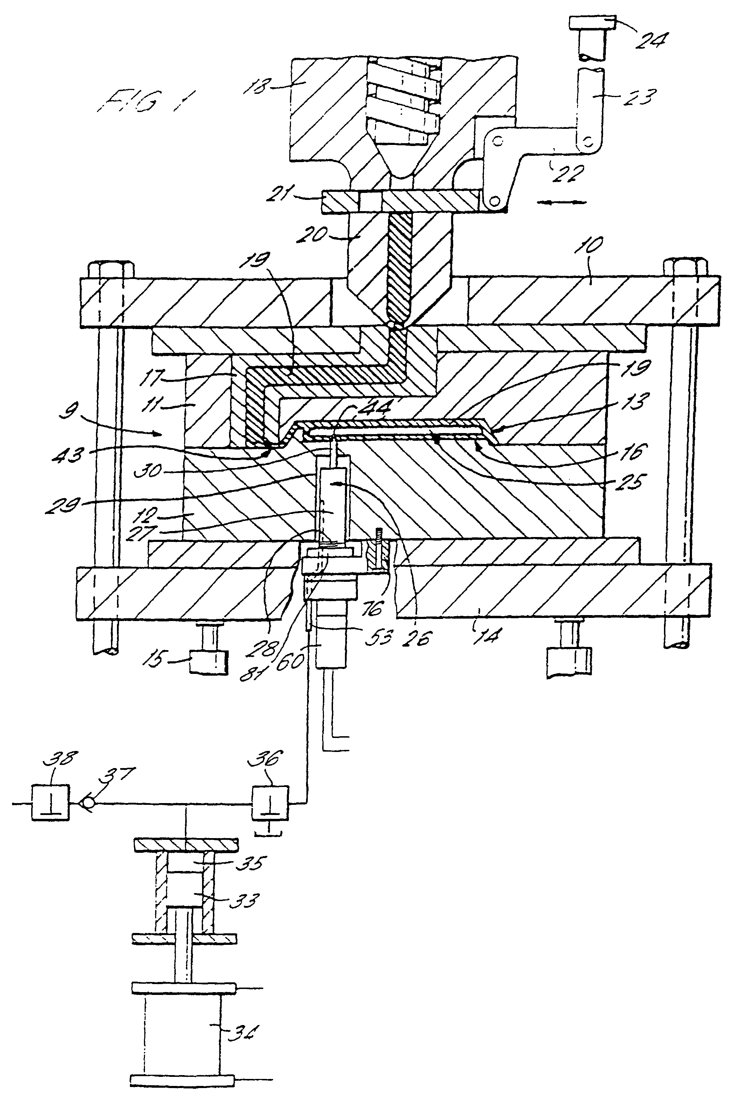

This example concerns an apparatus for producing injection mouldings of plastics material which is based on the apparatus illustrated in Figure 1 of British Patent Specification No. 2202181. Also in general terms, the process of injection moulding is the same as described in that prior specification.

More particularly, a mould 9 of an injection moulding machine has upper and lower parts 11, 12 defining a mould cavity 13 of complex design and incorporating a rib 16. The mould parts 11, 12 are mounted between a fixed upper platen 10 and a lower platen 14 movable by a hydraulic ram 15. Also, in this embodiment, within the upper mould part 11 is a hot runner manifold 17 leading to a desired point of entry or opening 43 to the mould cavity 13.

A screw ram 18 is provided for introducing molten thermoplastic material 19 through a nozzle assembly 20 to the hot runner manifold 17 and hence through the opening 43 in the mould cavity 13. The nozzle assembly is provided with a shut-off slide valve 21 activated by a bell-crank lever 22 and a link 23 connected to a hydraulic cylinder 24. The valve 21 is shown in its closed position at the end of that part of the moulding cycle which includes the introduction of the plastics material. The closed valve prevents any back flow of plastics material to the barrel of the screw ram, which may then be refilled with plastics material in preparation for the next moulding cycle.

A gas supply/relieving nozzle 26 provided for introducing pressurized gas to create a gas containing cavity 25 in the plastics material 19 has its downstream end located at a separate opening 44 in the mould cavity.

The nozzle 26 is mounted in a counterbore 29 in the lower part 12 of the mould, which is aligned with the opening 44. The nozzle 26 comprises a body member 27 having, in this embodiment, an external thread 28 for attachment of the nozzle by a nut 81 to a bracket 76 bolted to the lower part 12 of the mould. The nozzle thereby projects through the lower part 12 and a cylindrical extension member 30 extends from the inner end of the body member to the opening 44. The extension member 30 acts as a housing for a sleeve 31 through which pressurized gas is supplied to the mould cavity to create the gas filled cavity 25 in the plastics material 19.

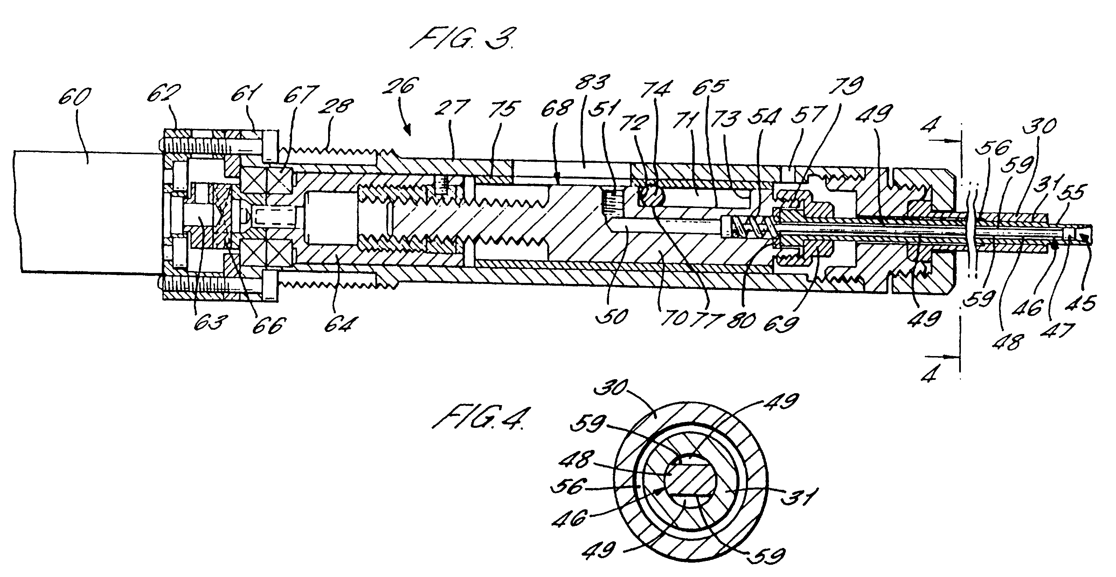

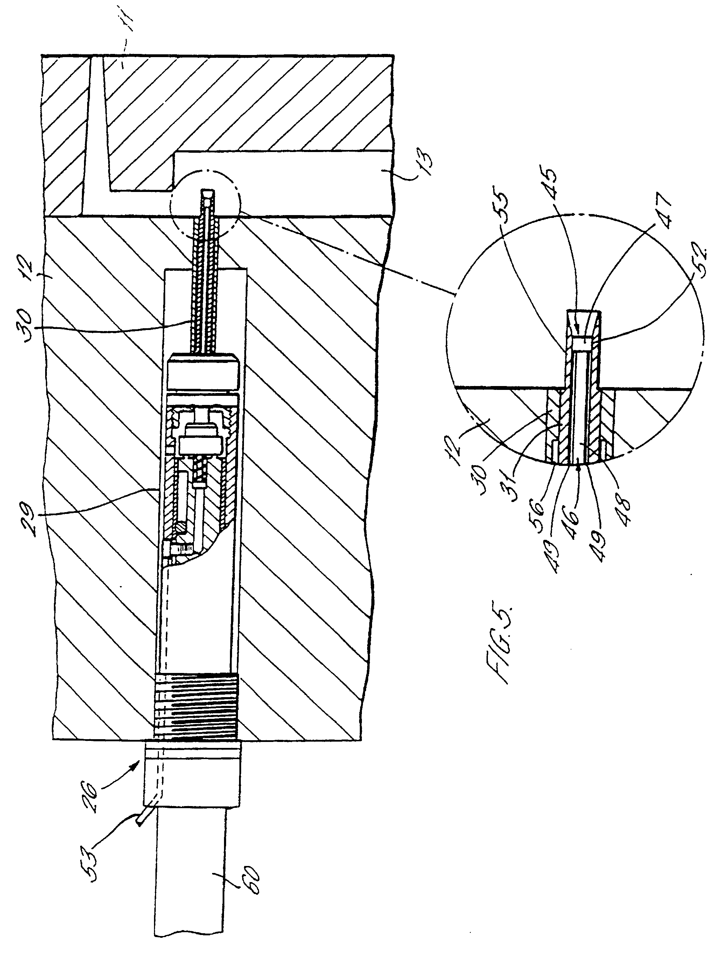

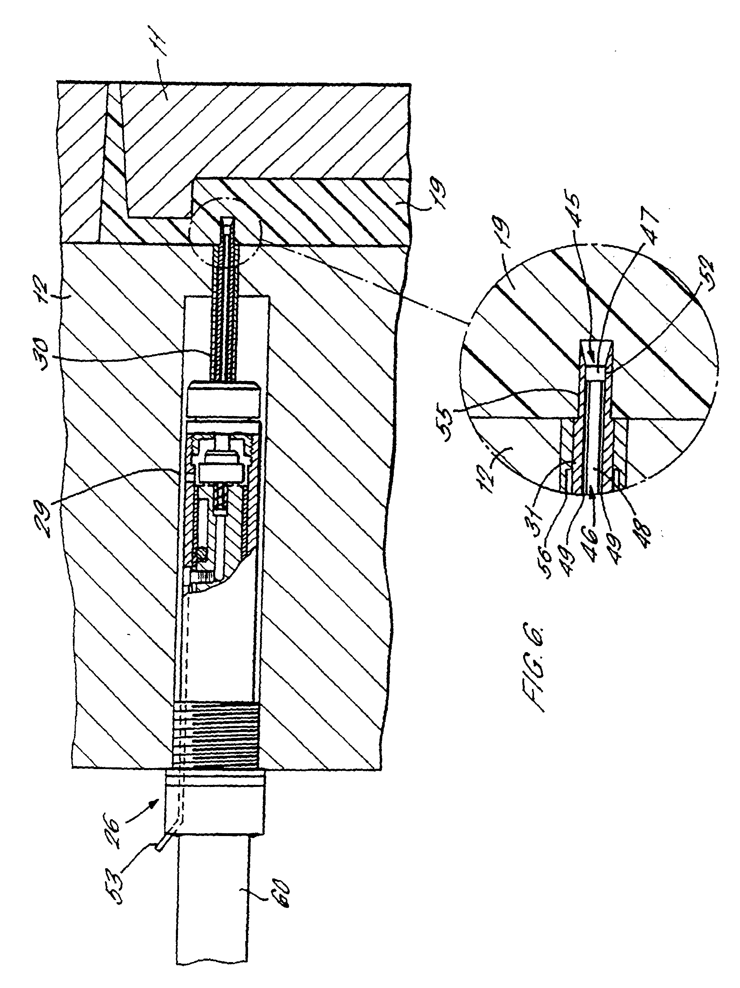

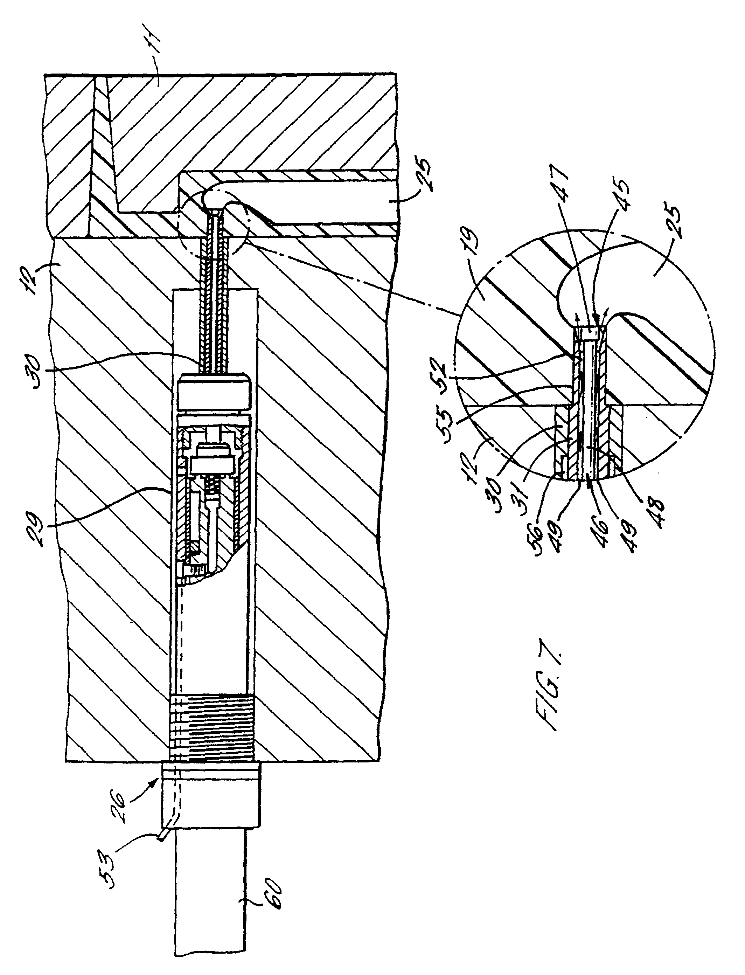

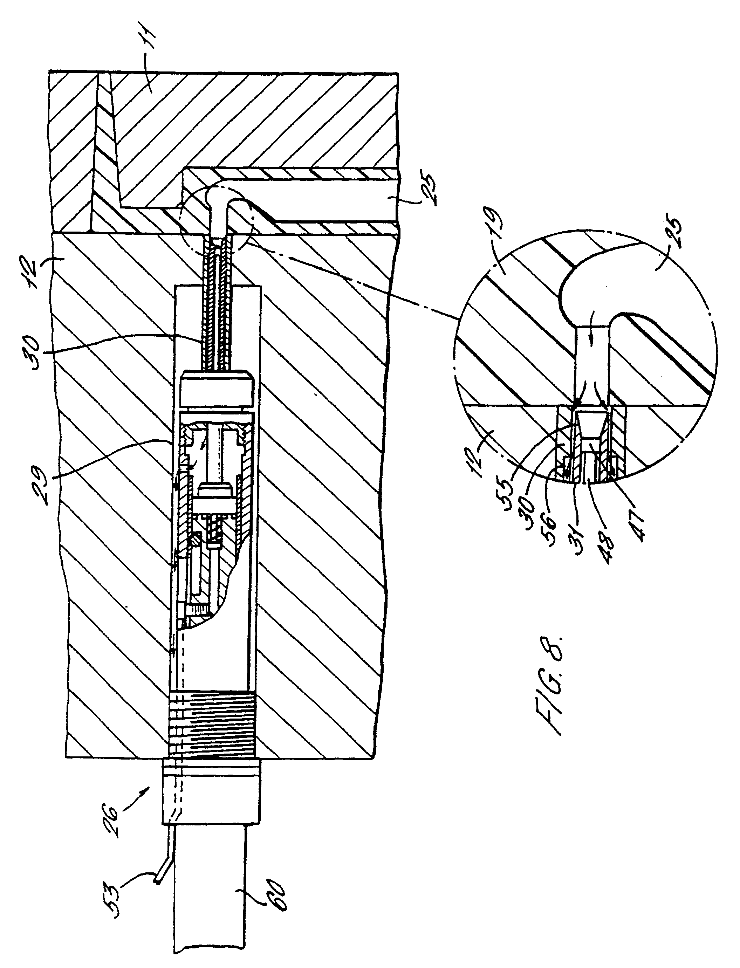

The sleeve 31 is movable between an extended position in which the outer end adjacent the mould cavity 13 extends beyond the extension member 30 into the mould cavity (Figure 5) and a retracted position in which the outer end of the sleeve is withdrawn into the extension member (Figure 8). The outer end of the sleeve defines a valve port 45 having a valve seat 52 for an inner valve member 46 which is axially movable within the sleeve for opening and closing the valve port. A valve head 47 engages the valve seat 52 when the valve member is withdrawn into the sleeve, the wall of the sleeve being tapered inwardly from the outer end of the sleeve to provide a lead-in to facilitate location of the valve head on the valve seat.

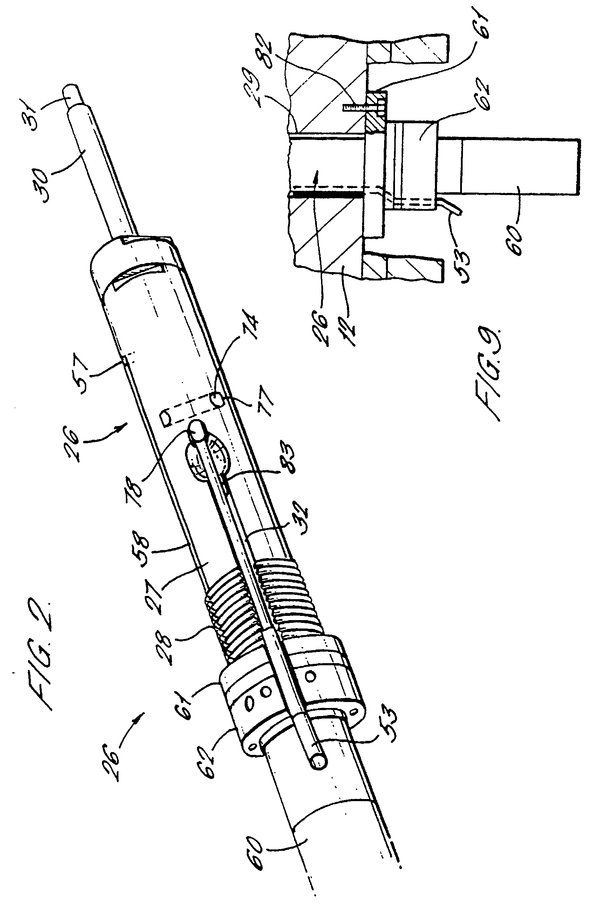

The valve stem 48 has opposed flats 59 extending along the length of the stem defining gas passages 49 through the sleeve which, at their upstream ends, communicate via a sealed connection with a longitudinal bore 50 and upstream thereof a radial bore 51 within the body member of the nozzle. The radial bore 51 is threaded for screw connection to a connector 78 on one end of a gas feed pipe 53, and a spring 54 located in an enlarged portion of bore 50 is provided for withdrawing the valve member 46. To facilitate the mounting of nozzle 26 in counterbore 29 in the lower mould part 12, a channel 32 is provided extending longitudinally of the body member (Figure 2), whereby the feed pipe 53 can be compressed into the channel after it is connected to the nozzle by screwing the connector 78 into bore 51. There is also provided a slot 83 in the nozzle body member 27 to allow for movement of the feed pipe 53 and the connector 78 longitudinally of the nozzle during extension and retraction of the sleeve 31. Pressurized gas, e.g. nitrogen, is supplied to the feed pipe 53 from a chamber 35 by a piston and cylinder 33, 34, via a solenoid operated valve 36 which has a facility to vent. The chamber 35 is also connected to a gas supply (not shown) via a non-return valve 37 and a pressure regulator valve 38. With the sleeve 35 extended and valve 36 open to supply gas to the nozzle, pressurized gas from the chamber 35 will flow through feed pipe 53 into the bores 51, 50 and the passages 49. The gas pressure will overcome the spring 54, thereby lifting the valve head 47 and injecting gas into the plastics within the mould cavity (Figure 7). When the gas pressure behind the valve head 47 declines by opening valve 36 to vent,the inner valve member will be withdrawn by the spring into its valve port closed position.

For subsequent venting of the gas from the mould cavity, the outer end of the sleeve 31 has an external rebate 55 around its periphery which communicates, in the retracted position of the sleeve, with an annular gap 56 extending longitudinally between the sleeve and the extension member 30 to an open position in the body member 27 of the nozzle. The gas can thereby escape through hole 57 in the body member, along a groove 58 in the external surface of the body member, the groove extending to the threaded end of the body member, and thereby to atmosphere.

For extending and retracting the sleeve 31, and thereby the inner valve member 46, the nozzle has a reversible electric motor 60 for driving the sleeve linearly into and out of the mould cavity 13. The motor 60 and integral gear box is bolted to a flange 61 of the body member 27 using an adaptor plate 62. The output shaft 63 of the gear box drives nut 64 via clutch 66. The nut 64 rotates within the body member and is supported by bearing assembly 67. A spindle 68 is in threaded connection with the nut 64 at one end, and is connected to the inner end of the sleeve 31 at the other end. The inner end of the sleeve 31 engages a socket 79 in the spindle 68 and is held captive by lock nut 69. A copper sealing washer 80 in the socket 79 ensures a sealed gas connection between bore 50 and the sleeve 31. The spindle contains the gas feed bores 50,51 and houses the spring 54 for withdrawing the inner valve member 46. A barrel portion 70 of the spindle 68 has a longitudinal slot 71 for reception of a stop pin 74. The pin 74 is generally D-shaped with its flat 77 in surface contact with the base 65 of the slot 71, whereby the spindle 68 is guided for longitudinal movement towards and away from the mould cavity 13 as the nut 64 is rotated first in one direction and then the other direction by the motor 60. The end surfaces 72, 73 of the longitudinal slot 71 act as dead stops when engaged by the stop pin 74 which define the forward (extended) and backward (retracted) end positions respectively of the sleeve 31.

The electric motor 60 has a stall mode actuated by a current limiting device or other means, e.g. limit switches, when the sleeve is either fully extended or fully retracted so that the motor is not continuously driving the nut 64. Thereby, with the sleeve 31 extended, the load of any pressure on the outer end of the sleeve, tending to retract the sleeve into the nozzle, is directed down the axis of the stationary spindle 68 and nut 64 onto the bearing assembly 67 and not onto the motor 60 or its gear box.

In operation, at the start of the moulding cycle the gas feed pipe 53 is attached to the nozzle 26 by screwing the connector 78 into bore 51. With the gas feed pipe 53 compressed into the channel 32, the nozzle 26 is projected through the bracket 76 into the counterbore 29 in the lower part 12 of the mould to position its inner end at the gas opening 44. The nozzle 26 is then attached to the bracket 76 by the nut 81 engaging the screw thread 28 thereby mounting the nozzle in the mould. In this embodiment, when the nozzle is fully inserted, the end of the extension member 30 is approximately level with the wall surface of the mould cavity 13. The electric motor 60 is actuated to drive the sleeve 31 forward into its extended position so that the sleeve 31 with the inner valve member projects into the mould cavity, approximately half-way relative to the thickness of the rib 16. The valve head 47 of the inner valve member 46 is held positively on the valve seat 52 by the spring 54 so that the valve port 45 at the gas opening 44 is closed (Figure 5). With the sleeve in its extended position, the current to the motor 60 is tripped whereby the motor enters its stall mode 8 so that the motor is not continuously operated. The sleeve is thereby temporarily locked in its extended position so that the load of any longitudinal pressure on the sleeve tending to retract the sleeve is directed down the axis of the stationary spindle 68 and nut 64 onto the bearing assembly 67, and not onto the motor or the gear box. The screw ram 18 contains molten plastic material and the slide valve 21 is open. The chamber 35 is also filled with pressurized gas and both valves 36 and 38 are closed.

Operation of the screw ram 18 introduces the plastics material 19 into the mould cavity 13 through the opening 43 via the hot runner manifold 17. In this embodiment, the amount of plastics material introduced is less than sufficient to fill the mould cavity 13. Simultaneously, a gas delay timer is started. At the end of this delay time, the outlet end of the sleeve 31 of nozzle 26 is covered by plastics material, but the inner valve member 46 is still withdrawn in its valve port closed position preventing the ingress of plastics material past the valve head 47 (Figure 6). Valve 36 is then opened to supply gas and the piston and cylinder 33, 34 is operated to introduce gas into the mould cavity through nozzle 26. The pressurized gas is fed through pipe 53 and bores 51, 50 to move the inner valve member 46 into the extended or valve port open position (Figure 7) in which the valve head 47 is lifted off the valve seat 52 against the pressure of the spring 54. The gas then flows into the plastics material within the mould cavity to create a gas containing cavity 25 in the plastics material. The pressurization in the gas is maintained by the piston and cylinder 33,34 whereby the gas in the plastics material causes the plastics material to flow throughout the mould cavity 13 with the gas containing cavity 25 within the plastics material, the cavity 25 thereby extending with the plastics material until the plastics material has extended over the whole of the mould cavity. The gas flow pressure to the cavity 25 is maintained to hold the plastics material in the mould cavity positively against the mould surface as the plastics material solidifies and cools until the moulding can itself sustain the form dictated by the mould surface.

The valve 36 is opened to vent whereby the gas pressure behind the valve head 47 drops and the piston 33 is withdrawn. Opening valve 38 enables the cylinder 34 to be refilled with another quantity of gas under pressure.

As the gas pressure in the nozzle 26 has fallen, the inner valve member 46 is retracted by the spring 54 into its valve port closed position, the valve head 47 being withdrawn to rest positively against the valve seat 52. The motor 60 is actuated in reverse to fully retract the sleeve into its retracted position, whereupon the motor enters its stall mode. The end of the sleeve is then positioned out of the mould cavity and the rebate 55 becomes in communication with the gap 56 between the sleeve 31 and the extension member 30. Consequently the gas in the cavity 25 is vented through the gap 56, hole 57 and groove 58 to atmosphere (Figure 8), thereby relieving the gas pressure in the cavity 25. The mould is then opened and the moulding removed.

The motor is actuated to extend the sleeve 31 to its forward end position and the motor enters its stall mode, to await the introduction of plastics material during the next moulding cycle.

The invention is not restricted to the specific details of the embodiment described above. For example, the nozzle 26 may be mounted in a different manner in the lower part 12 of the mould. The counterbore 29 may have an internal thread so that the nozzle is screw mounted directly into the mould by employing the thread 28 on the nozzle, whilst the gas feed pipe 53 is compressed into channel 32.

In another embodiment, as shown in Figure 9, the flange 61 of the body member 27 is of larger diameter than the adaptor plate 62, and the body member is attached to the lower part 12 of the mould by three bolts 82 (one being shown) passing through the flange 61 directly into the lower part of the mould. In this case the thread 28 on the body member 27 is omitted.

Indeed, it will be appreciated that the counterbore 29 in the lower part 12 of the mould and/or any attachment bracket 76 may be adapted to allow the same nozzle 26 to be mounted in moulds of different dimensions so that. the nozzle still projects sufficiently through one mould part and is aligned with the gas opening 44. Alternatively, the nozzle illustrated could be modified by attachment of a different length extension member 30, together with an appropriate length sleeve 31 and inner valve member 46. For example, for a deeper lower mould part 12, a longer extension member 30, sleeve 31 and valve member 46 would by provided, whilst for a narrower lower mould part 12, the length of the extension member, sleeve and valve member would be correspondingly shorter.

Also the opening 44 can be directly in the mould cavity 13, as illustrated, or in communication therewith.

Furthermore, a nozzle of the kind described may be provided at a different position than the position illustrated or at more than one position in the mould, in the same manner as described in relation to the embodiments of Figures 4 to 9 of British Patent Specification No.2202181. Similarly, as described in the same prior specification, two or more openings 43 may be provided through which the molten plastics material enters the mould cavity 13.

## Claims

1. A nozzle (26) for supplying/relieving pressurized gas in gas assisted injection moulding of plastics material, the nozzle comprising:
a body member (27) adapted to be mounted in a mould (9)having a mould cavity (13), a portion of the body member or an extension (30) thereof extending into an opening (44) in the mould which at least communicates with the mould cavity;
a sleeve member (31) mounted for sliding movement in a bore in the extending portion of the body member between an extended position in which one end of the sleeve projects beyond the extending portion of the body member into the mould cavity, and a retracted position;
said one end of the sleeve defining a valve port (45) for an inner valve member (46) axially movable within the sleeve for opening and closing the valve port,
attachment means (53) for supplying pressurized gas to the inside of the sleeve whereby the inner valve member is movable into a valve port open position by the pressurized gas;
means (54) for moving the inner valve member into a valve port closed position;
means (60) for moving the sleeve between its extended and its retracted positions, and
a gap (56) between the adjacent wall of the sleeve and the extending portion of the body member, which gap is closed to the mould cavity when the sleeve member is extended and open to the mould cavity when the sleeve member is retracted, whereby in the retracted position of the sleeve, the pressurized gas within the mould cavity can vent to atmosphere.

2. A nozzle as claimed in Claim 1, wherein means for moving the sleeve (31) between its extended and retracted positions is a reversible electric motor (60), the sleeve being connected to the motor by means which enable the sleeve to move linearly.

3. A nozzle as claimed in Claim 2, wherein when the sleeve (31) reaches its extended position, the motor (60) enters a stall mode.

4. A nozzle as claimed in Claim 2 or Claim 3, wherein with the sleeve (31) in its extended position, pressure on the sleeve is isolated from the motor (60) and its gear box.

5. A nozzle as claimed in any one of Claims 2 to 4, wherein the connection means between the sleeve (31) and the motor (60) is a nut (64) and spindle (68) in driving relation, the nut being driven by the motor and the spindle being connected to the sleeve.

6. A nozzle as claimed in any one of the preceding claims, wherein the body member (27) has an external thread (28) for mounting the nozzle (26) in a mould part (12) or a bracket (76) fixed thereon.

7. A nozzle as claimed in any one of Claims 1 to 5, wherein the body member (27) is bolted to a mould part (12).

8. A nozzle as claimed in any one of the preceding claims, wherein the wall of the sleeve (31) is tapered inwardly from the outer end of the sleeve to define a lead-in to the valve seat (52) of the valve port (45).

9. A nozzle as claimed in any one of the preceding claims, wherein the means for moving the inner valve member (46) into a valve port closed position is a spring (54).

10. A nozzle as claimed in any one of the preceding claims, wherein the inner valve member (46) is a sliding fit within the sleeve (31), and has at least one flat (59) extending longitudinally of the valve member to create a passage (49) for pressurized gas through the sleeve when the inner valve member is extended by the pressure of the gas.

11. A nozzle as claimed in any one of the preceding claims, wherein the outer end of the sleeve (31) is of reduced external dimension relative to the internal dimension of the extending portion (30) of the body member (27), and wherein the body member has at least one groove (58) extending longitudinally from a position at one end where it can communicate with the reduced end portion of the sleeve when the sleeve is in its retracted position, but is precluded from said communication when the sleeve is in its extended position, to an open position at its other end where it communicates directly or indirectly with the atmosphere.

12. Apparatus for gas-assisted injection moulding including a nozzle (26) as claimed in any one of the preceding claims.

## Patentansprüche

1. Düse (26) zum Zuführen/Ablassen von Druckgas beim gasunterstützten Spritzgießen von Kunststoffmaterial, wobei die Düse umfasst:
ein Körperteil (27), welches dazu ausgebildet ist, in eine Form (9) mit einem Formhohlraum (13) montiert zu werden, wobei sich ein Abschnitt des Körperteils oder eine Verlängerung (30) desselben in eine Öffnung (44) in der Form erstreckt, welche wenigstens mit dem Formhohlraum in Verbindung steht;
ein Hülsenelement (31), das in eine Bohrung in dem Verlängerungsabschnitt des Körperteils montiert ist für eine Schiebebewegung zwischen einer ausgefahrenen Position, in welcher ein Ende der Hülse über den Verlängerungsabschnitt des Körperteils hinaus in den Formhohlraum vorragt, und einer zurückgezogenen Position;
wobei das eine Ende der Hülse eine Ventilöffnung (45) für ein inneres Ventilelement (46) definiert, das innerhalb der Hülse zum Öffnen und Schließen der Ventilöffnung axial beweglich ist,
Anschlussmittel (53) zur Zufuhr von Druckgas zur Innenseite der Hülse, wodurch das innere Ventilelement in eine Ventilöffnungsoffenposition durch das Druckgas bewegbar ist;
Mittel (54) zum Bewegen des inneren Ventilelements in eine Ventilöffnungsschließposition;
Mittel (60) zum Bewegen der Hülse zwischen ihrer ausgefahrenen und ihrer zurückgezogenen Position, und
einen Spalt (56) zwischen der benachbarten Wand der Hülse und dem Verlängerungsabschnitt des Körperteils, welcher Spalt zum Formhohlraum hin geschlossen ist, wenn das Hülsenelement ausgefahren ist und zum Formhohlraum hin offen ist, wenn das Hülsenelement zurückgezogen ist, wodurch in der zurückgezogenen Position der Hülse Druckgas innerhalb des Formhohlraums zur Atmosphäre hin austreten kann.

2. Düse nach Anspruch 1, wobei ein Mittel zum Bewegen der Hülse (31) zwischen ihrer ausgefahrenen und ihrer zurückgezogenen Position ein reversierbarer Elektromotor (60) ist, wobei die Hülse mit dem Motor durch Mittel verbunden ist, welche ermöglichen, dass sich die Hülse linear bewegt.

3. Düse nach Anspruch 2, wobei dann, wenn die Hülse (31) ihre ausgefahrene Position erreicht, der Motor (60) in einen Haltemodus eintritt.

4. Düse nach Anspruch 2 oder Anspruch 3, wobei dann, wenn die Hülse (31) in ihrer ausgefahrenen Position ist, der Druck an der Hülse von dem Motor (60) und seinem Getriebe isoliert ist.

5. Düse nach einem der Ansprüche 2 bis 4, wobei das Verbindungsmittel zwischen der Hülse (31) und dem Motor (60) eine Mutter (64) und eine Spindel (68) in Antriebsrelation ist, wobei die Mutter von dem Motor angetrieben wird und die Spindel mit der Hülse verbunden ist.

6. Düse nach einem der vorhergehenden Ansprüche, wobei das Körperteil (27) ein Außengewinde (28) zur Befestigung der Düse (26) in einem Formteil (12) oder einer daran befestigten Halterung (76) umfasst.

7. Düse nach einem der Ansprüche 1 bis 5, wobei das Körperteil (27) mit einem Formteil (12) durch Bolzen verbunden ist.

8. Düse nach einem der vorhergehenden Ansprüche, wobei die Wand der Hülse (31) vom äußeren Ende der Hülse nach innen verjüngt ist, um eine Einleitung zum Ventilsitz (52) der Ventilöffnung (45) zu definieren.

9. Düse nach einem der vorhergehenden Ansprüche, wobei das Mittel zum Bewegen des inneren Ventilelements (46) in eine Ventilöffnungsschließposition eine Feder (54) ist.

10. Düse nach einem der vorhergehenden Ansprüche, wobei das innere Ventilelement (46) im Schiebesitz innerhalb der Hülse (31) ist und wenigstens eine sich längs des Ventilelements erstreckende. Abflachung (59) aufweist, um einen Durchgang (49) für Druckgas durch die Hülse zu erzeugen, wenn das innere Ventilelement durch den Druck des Gases ausgefahren ist.

11. Düse nach einem der vorhergehenden Ansprüche, wobei das äußere Ende der Hülse (31) eine reduzierte Außenabmessung relativ zu der Innenabmessung des Verlängerungsabschnitts (30) des Körperteils (27) aufweist und wobei das Körperteil wenigstens eine Nut (58) aufweist, welche sich längs von einer Position an einem Ende, wo sie mit dem reduzierten Endabschnitt der Hülse in Verbindung stehen kann, wenn die Hülse in ihrer zurückgezogenen Position ist, aber von der Verbindung ausgeschlossen ist, wenn die Hülse in ihrer ausgefahrenen Position ist, zu einer offenen Position an seinem anderen Ende erstreckt, wo sie direkt oder indirekt mit der Atmosphäre in Verbindung steht.

12. Vorrichtung für gasunterstütztes Spritzgießen, umfassend eine Düse (26) nach einem der vorhergehenden Ansprüche.

## Revendications

1. Buse (26) pour fournir/détendre du gaz sous pression lors du moulage par injection assisté 'par gaz d'une matière plastique, la buse comportant :
un organe formant corps (27) adapté pour être monté dans un moule (9) ayant une cavité de moule (13), une portion de l'organe formant corps ou une extension (30) de celui-ci s'étendant jusque dans une ouverture (44) prévue dans le moule qui communique au moins avec la cavité du moule ;
un organe formant manchon (31) monté en vue d'un mouvement de coulissement dans un alésage prévu dans la portion qui s'étend de l'organe formant corps entre une position d'extension, dans laquelle une extrémité du manchon fait saillie au-delà de la portion qui s'étend de l'organe formant corps jusque dans la cavité du moule, et une position de rétraction ;
ladite extrémité du manchon définissant un orifice de soupape (45) pour un organe de soupape interne (46) apte à se déplacer axialement à l'intérieur du manchon pour ouvrir et fermer l'orifice de soupape ;
des moyens de raccordement (53) pour fournir du gaz sous pression à l'intérieur du manchon de sorte que l'organe de soupape interne puisse être déplacé vers une position d'ouverture d'orifice de soupape par le gaz sous pression ;
des moyens (54) pour déplacer l'organe de soupape interne vers une position de fermeture d'orifice de soupape ;
des moyens (60) pour déplacer le manchon entre ses positions d'extension et de rétraction ; et
un intervalle (56) prévu entre la paroi adjacente du manchon et la partie qui s'étend de l'organe formant corps, intervalle qui est fermé par rapport à la cavité' du moule lorsque l'organe formant manchon est étendu, et ouvert par rapport à la cavité du moule lorsque l'organe formant manchon est rétracté, de sorte que, dans la position de rétraction du manchon, du gaz sous pression présent dans la cavité du moule peut être mis à l'air libre.

2. Buse selon la revendication 1, **caractérisé en ce que** les moyens pour déplacer la buse (31) entre ses positions d'extension et de rétraction sont constitués d'un moteur électrique réversible (60), le manchon étant relié au moteur par des moyens qui permettent un déplacement linéaire du manchon.

3. Buse selon la revendication 2, dans laquelle, lorsque le manchon (31) atteint sa position d'extension, le moteur (60) passe en mode calage.

4. Buse selon la revendication 2 ou la revendication 3, dans laquelle, le manchon (31) étant dans sa position d'extension, une pression exercée sur le manchon est isolée du moteur (60) et de sa boîte de vitesses.

5. Buse selon l'une quelconque des revendications 2 à 4, dans laquelle les moyens de raccordement entre le manchon (31) et le moteur (60) sont constitués d"un écrou (64) et d'une tige (68) en relation d'entraînement, l'écrou étant entraîné par le moteur et la tige étant reliée au manchon.

6. Buse selon l'une quelconque des revendications précédentes, dans laquelle l'organe formant corps (27) a un filetage externe (28) pour le montage de la buse (26) dans une partie de moule (12) ou sur un support (76), fixé sur cette dernière

7. Buse selon l'une quelconque des revendications 1 à 5, dans laquelle l'organe formant corps (27) est boulonné sur une partie de moule (12).

8. Buse selon l'une quelconque des revendications précédentes, dans laquelle la paroi du manchon (31) diminue progressivement à partir de l'extrémité externe de celui-ci de manière à définir une entrée de guidage vers le siège de soupape (52) de l'orifice de soupape (45).

9. Buse selon l'une quelconque des revendications précédentes, dans laquelle les moyens pour déplacer l'organe de soupape interne (46) vers une position de fermeture d'orifice de soupape est un ressort (54).

10. Buse selon l'une quelconque des revendications précédentes, dans laquelle l'organe de soupape interne (46) s'adapte à coulissement à l'intérieur du manchon (31) et comporte au moins méplat (59) s'étendant dans le sens de la longueur de l'organe de soupape de façon à créer un passage (49) pour du gaz sous pression à travers le manchon lorsque l'organe de soupape interne est étendu par la pression du gaz.

11. Buse selon l'une quelconque des revendications précédentes, dans laquelle l'extrémité externe dû manchon (31) est d'une dimension externe réduite par rapport à la dimension interne de la partie qui s'étend (30) de l'organe formant corps (27), et dans laquelle ce dernier comporte au moins une rainure (58) s'étendant longitudinalement depuis une position à une extrémité dans laquelle il peut communiquer avec la portion d'extrémité réduite du manchon lorsque celui-ci est dans sa position de rétraction, mais n'a plus la possibilité de ladite communication lorsque le manchon se trouve dans sa position d'extension, jusqu'à une position d'ouverture dans laquelle il communique directement ou indirectement avec l'atmosphère.

12. Appareil pour le moulage par injection assisté par gaz, comprenant une buse (26) selon l'une quelconque des revendications précédentes.
